(19) Europäisches Patentamt
European Patent Office
Office européen des brevets

(11) EP 2 085 155 A1

(12) EUROPEAN PATENT APPLICATION

(43) Date of publication:
05.08.2009 Bulletin 2009/32

(51) Int Cl.:
B08B 9/04 (2006.01)     F16L 55/38 (2006.01)
G01N 27/90 (2006.01)    G01N 29/265 (2006.01)

(21) Application number: 08001849.2

(22) Date of filing: 31.01.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: HAPP Technology Ltd.
85640 Putzbrunn (DE)

(72) Inventor: Stoltze, Björn
85640 Putzbrunn (DE)

(74) Representative: Klunker . Schmitt-Nilson . Hirsch
Destouchesstrasse 68
80796 München (DE)

(54) **Method and apparatus for inspecting the integrity of pipeline walls**

(57)     A method and an apparatus for inspecting the integrity of a gas pipeline wall are disclosed. An inspection tool (1), in particular an ultrasonic inspection tool contained in a water batch (2), is inserted into the pipeline (20) and moved through the pipeline to collect data while moving. In order to control the travel speed, a brake unit (100) is provided and moved together with the inspection tool (1). The brake unit has a plurality of brake wheels (101) uniformly distributed over the circumference of the pipeline (20) and urged against the pipeline wall (22) so as to roll on the wall. The brake wheel rotation is used to pump a fluid through a throttle (102), thereby building up a pressure in front of the throttle which counteracts the brake wheel rotation. Provided that the brake wheels (101) are urged against the pipeline wall with a sufficient force, such counterforce is transferred onto the pipeline wall (22) as a brake force ($F_{R, brake}$). Thus, the brake force increases with the travel speed. This way, an undesirably high travel speed of the inspection tool (1) can be prevented in a simple and reliable manner.

FIG 6

EP 2 085 155 A1

**Description**

BACKGROUND OF THE INVENTION

The present invention relates to a method and an apparatus for inspecting the integrity of the wall of a pipeline, in particular a gas pipeline.

Pipelines are used all around the world for transporting different kinds of media like natural gas, crude oil and refined products. From time to time the integrity of the pipeline wall has to be inspected. This includes geometric inspections like gauging the internal bore and the wall thickness and is in particular directed to detecting any cracks in the wall or other signs of wall fatigue. Known devices for such testings include a variety of techniques known as magnetic flux leakage (MFL), axial flow detection (AFD), electro-magnetic acoustic transducers (EMAT) and ultrasonic testing. While traveling along the pipeline, inspection data are collected. At the end of the journey, the collected inspection data will be analysed.

To get accurate results, the inspection tool should move at a moderate constant speed between 0.5 and 5 m/s. For instance, with MFL inspection tools the build up of magnetic field in the pipeline wall is directly dependent upon the travel speed of the MFL inspection tool. Similarly, in ultrasonic inspection tools the resolution of the scanning of the pipeline wall becomes unsatisfactory above a certain travel speed. Of course, with modern inspection tools the maximum allowable travel speed might be increased, but there will always be a certain upper limit.

Another drawback of the limited speed with which the inspection tool is moved along the pipeline section to be inspected resides in the significant loss of throughput through the pipeline during its inspection.

It has therefore been proposed to create a bypass within the inspection tool so that the inspection tool is made to travel slower than the product transported in the pipeline (APIA Company Member News in "The Australian Pipeliner - August 2003", page 24 ff). The travel speed is actively controlled by regulating the cross-sectional area of the bypass whenever required so as to ensure that the operating speed of the inspection tool is maintained, even when the flow rate in the pipeline changes. This can occur due to a reduction of throughput at a takeoff or an increase at a tie in. Accordingly, a control valve is used to control the cross-sectional area of the bypass depending upon the flow rate in the pipeline, thereby actively controlling the travel speed of the inspection tool.

A problem with this kind of active speed control consists in the complex electronic control needed to open and close the bypass according to the travel speed and the fact that such system naturally suffers from a minimum reaction time. That is, sudden changes of travel speed can not always be appropriately handled. For instance, the change of travel speed does not only depend on the reduction of throughput at take offs or increase of throughput at a tie in. It may well be that the inspection tool slows down or even gets stuck in a pipeline section due to increased frictional resistance in the pipeline or that due to changes in the pipeline inclination the weight of the inspection tool accelerates or slows down the inspection tool, which changes can occur relatively sudden.

The control of the travel speed of the inspection tool within a pipeline is a particular problem when gas pipelines are inspected, because the gas column behind the inspection tool is pushing the inspection tool through the pipeline with a fair amount of pressure and, due to the compressibility of gas, at the same time is acting like a gas spring. That is, sudden changes occurring due to the overcoming of sections of increased frictional resistance will cause enormous acceleration of the inspection tool followed by a deceleration, sometimes up to a complete halt again.

Also, during gas pipeline inspections with an ultrasonic inspection tool, wherein the inspection tool is contained within a liquid batch in order to provide the necessary liquid for the ultrasonic sound wave to be guided between the inspection tool and the pipeline wall, the acceleration in negatively inclined pipeline sections can become a severe problem. This is due to the enormous weight of the liquid batch. The liquid batch in which the ultrasonic inspection tool is contained is usually a water batch with a length of sometimes more than 1000 meters. The water batch is sealed with front and rear shields against any leakage to the front and rear. The length of the water column transported with the liquid batch between the front and rear shield is needed in order to compensate the loss of liquid, such as at take offs and tie ins. As a consequence, due to such radial leakage of liquid from the liquid batch, the length and weight of the liquid batch will reduce in the course of the inspection run. However, the weight of the water batch is so large that it can be difficult to maintain a moderate travel speed in pipeline sections with negative inclination.

SUMMARY OF THE INVENTION

It is an object of the present invention to provide a method and an apparatus for inspecting the integrity of pipeline walls, in particular gas pipeline walls, more reliably.

This object is solved according to the present invention with a method and an apparatus as defined in the independent claims. In the dependent claims, preferred embodiments and developments of the invention are defined.

The present invention envisages a hydromechanical solution. More specifically, a brake unit is moved along the pipeline section together with the inspection tool in order to control the travel speed of the inspection tool. The brake unit comprises at least one brake wheel and preferably a plurality of brake wheels distributed over the circumference of the brake unit so as to come into contact with the pipeline wall. More specifically, the brake wheel is urged against the pipeline wall so as to enable the brake wheel to roll on the wall. By means of the brake wheel rotation, a fluid is pumped through a throttle. Thus, a fluid pressure builds up in front of the throttle. The pressure drop over the throttle has to be overcome by action of the brake wheel, this creating a counterforce on the brake wheel rotation. This counterforce is transferred onto the pipeline wall as a frictional force, provided that the force with which the brake wheel is urged against the pipeline wall is sufficiently high. If such urging force is not enough to transmit a frictional force on the pipeline wall that exceeds the counterforce acting on the brake wheel, then the brake wheel will partly slide along the pipeline wall. In any case, the counterforce created on the brake wheel by the pressure drop over the throttle is transformed into a corresponding frictional force acting on the pipeline wall, and said frictional force basically corresponds to the braking force with which the inspection tool resists the driving pressure resulting from the products, such as gas, transported through the pipeline. As an additional force acting on the inspecting tool, gravitational driving forces caused by the weight of the overall apparatus must be considered. The gravitational driving force depends on the pipeline inclination angle and must also be compensated by the brake unit.

A method and apparatus as described before is both reliable and not very complex. Sensors to determine the actual travel speed and any electric control logic can be dispensed with (but are not excluded). The solution is mainly mechanical and, if a liquid such as oil is used as the fluid to be pumped through the throttle, is hydromechanical. The hydromechanical apparatus is most responsive on any travel speed changes since the liquid is substantially incompressible so that pressure changes are transmitted instantaneously.

Thus, with the present invention, when the travel speed of the inspecting tool changes, this will have an immediate effect on the rotational speed of the brake wheel. This, in turn, will have an immediate effect on the hydraulic pressure build up in front of the throttle, so that the counterforce acting against the brake wheel rotation and being transformed into the inspection tool braking force also changes immediately.

Preferably, the brake unit is configured such that the fluid pressure building up in front of the throttle increases progressively, more preferably exponentially, with an increase of the rotational speed of the brake wheel. By this, the total brake force which is a function of the travel speed, first builds up moderately and then more and more aggressively. The operating point of the travel speed can be appropriately chosen so that it can be reached by slowly increasing the travel speed of the inspection tool, whereas above the operating point further acceleration of the inspection tool will very soon result in extremely high brake forces.

The higher the travel speed and, thus, the brake force is, the more important is it that the brake wheel is safely urged against the pipeline wall so that it can create the necessary frictional force between the brake wheel and the pipeline wall. On the other hand, the pressure on the pipeline wall should be kept as little as possible. It is therefore advantageous not to urge the brake wheel against the pipeline wall with a constant force, but only to the extent necessary. Therefore, according to a preferred embodiment of the invention, the force with which the brake wheel is urged against the pipeline wall is increased with an increase of the travel speed. This is achieved by generating at least a part of such force with the pressure building up in front of the throttle. Since this pressure increases with an increase of the rotational speed of the brake wheel and, thus, with an increase of the travel speed of the inspection tool, it is possible to increase the force with which the brake wheel is urged against the pipeline wall proportionally to the brake wheel rotation and, thus, proportionally to the brake force applied on the pipeline wall by the brake wheel.

More specifically, according to a preferred embodiment of the invention, the fluid pressure building up in front of the throttle is, directly or indirectly, transmitted onto a brake wheel fixture on which the brake wheel is rotatably mounted. This way, the brake wheel fixture with the brake wheel can be urged radially outwardly against the pipeline wall. Most specifically, a movable piston may be arranged between the brake wheel fixture and a body centrally arranged in the brake unit, the piston being so arranged that it urges apart the brake wheel fixture and the centrally arranged body when the fluid pressure from in front of the throttle is transmitted onto the brake wheel fixture. In this context, it has turned out to be advantageous when one end of the movable piston is supported on the centrally arranged body and the other end is arranged in a fluid chamber which is integrally connected to the brake wheel fixture. The fluid pressure transmitted from the throttle to the brake wheel fixture is then transmitted to said fluid chamber of the brake wheel fixture.

It will be appreciated that the brake unit as so far described does not create any brake force unless the brake wheel rotates. Therefore, when the apparatus starts travelling, there is a likelihood that the brake wheel will not start rotating due to a lack of friction between the brake wheel and the pipeline wall. It is therefore preferred to always apply on the brake wheel a predetermined minimum force urging the brake wheel against the pipeline wall. Most preferably, such predetermined minimum force is provided from a pressure reservoir, such as a pneumatic pressure reservoir.

It has previously been mentioned that it is preferable to provide a plurality of brake wheels over a circumference of the brake unit so as to come into contact with the pipeline wall. This is to uniformly distribute the brake forces over the pipeline wall and, in particular, the forces with which the brake wheels are urged against the pipeline wall.

It is further advantageous that two or more of the brake wheels are spaced apart in an axial direction, i.e. in a direction of movement of the brake unit. More specifically, if the brake unit has e.g. 16 brake wheels, 8 brake wheels may be distributed uniformly over the circumference of the brake unit, with always two brake wheels aligned in an axial direction. This way, the brake unit is stably held in the pipeline relative to the direction of movement. Also, due to the distance between the axially spaced apart brake wheels, the brake unit can easily pass take offs and tie ins in the pipeline.

In addition, the outer contour of the brake unit may be made concave in an area between the two axially spaced apart brake wheels so as to enable the brake unit to be moved through curved pipeline sections. In this context the afore described movable piston is advantageous as it allows the brake unit to conform to pipeline diameter changes during the travel through curved pipeline sections. Also, the movable piston makes it possible to use the brake unit in pipelines of different diameter. The movable piston will then simply spread apart the brake wheel fixture and the centrally arranged body when the brake unit is used in a pipeline with an increased diameter.

The inspection tool equipped with the afore described brake unit for the purpose of non-destructive inspection of the pipeline's wall integrity can be of many different types, known as magnetic flux leakage (MFL), axial flow detection (AFD) or electro-magnetic acoustic transducer (EMAT). Inspection tools of these types do not need to be placed in a liquid batch, unlike the previously mentioned ultrasonic inspection tools which need a liquid, typically water, to guide the ultrasonic waves between the ultrasonic head and the pipeline wall.

A shield may be provided which completely seals against the pipeline wall so as to prevent any bypassing of fluid that is advanced through the pipeline. This ensures that the maximum driving force is available at all times which allows the inspection tool to overcome even sections of strong resistance and/or with an extreme positive inclination. Thus, unlike the prior art methods, the inspection tool is actively slowed down solely by the brake unit, which is fixedly connected to the inspection tool either directly or indirectly and which may be placed in front of the shield or behind the shield.

In the case of inspecting a gas pipeline with an ultrasonic inspection tool, which requires the inspection tool to be placed inside a water batch, a second shield is needed so as to completely seal the liquid batch at a front and rear end thereof, in order to prevent any leakage of liquid from the liquid batch. The liquid is thus contained between the front and rear shields and the surrounding pipeline wall.

While in this case it is possible to place the brake unit in front of the front shield or behind the rear shield, it can be advantageous to place the brake unit inside the water batch. This is particularly suitable where the water from the water batch is used as the fluid to be pumped through the throttle of the brake unit.

As mentioned previously, the length of the liquid batch is chosen such that any loss of liquid in a radial direction, such as at take offs and tie ins, may be compensated. The weight of the overall inspecting system including the inspection tool and the water batch is, thus, enormous. It is therefore preferred to move a messenger liquid batch through the pipeline section prior to moving the overall inspecting system through the pipeline. The messenger liquid batch comprises a sufficient amount of liquid which may leak radially from the messenger liquid batch into gaps in the wall of the pipeline section as the messenger liquid batch is moved along the pipeline. This way, tie ins and take offs can be filled in advance, at least partly. Accordingly, the length and the weight of the liquid batch actually containing the inspection tool can be substantially reduced. Accordingly, since by the action of the brake unit less weight will have to be slowed down, the brake unit will be more effective and can be reduced in size.

The invention will now be described in more detail in context with some preferred embodiments of the invention as shown in the accompanying drawings.

BRIEF DESCRIPTION OF THE DRAWINGS

Figure 1 schematically shows the forces acting on an ultrasonic inspection tool contained in a liquid batch,

Figure 2 shows the ultrasonic inspection tool of figure 1 in somewhat more detail and including a brake unit,

Figure 3 shows an MFL inspection tool with the brake unit,

Figure 4 shows a principle drawing setting out the mode of operation of the brake unit,

Figure 5 shows an example of a brake wheel in the form of a rotational pump,

Figure 6 shows an enlarged view of the brake unit of figures 2 and 3,

Figure 7 shows a cross sectional view of the brake unit of figure 6,

Figure 8 shows the brake unit in a pipeline with a smaller diameter,

Figure 9 shows the brake unit in a curved pipeline section of small diameter, and

Figure 10 shows the brake unit in a curved pipeline section of large diameter.

DETAILLED DESCRIPTION OF THE DRAWINGS

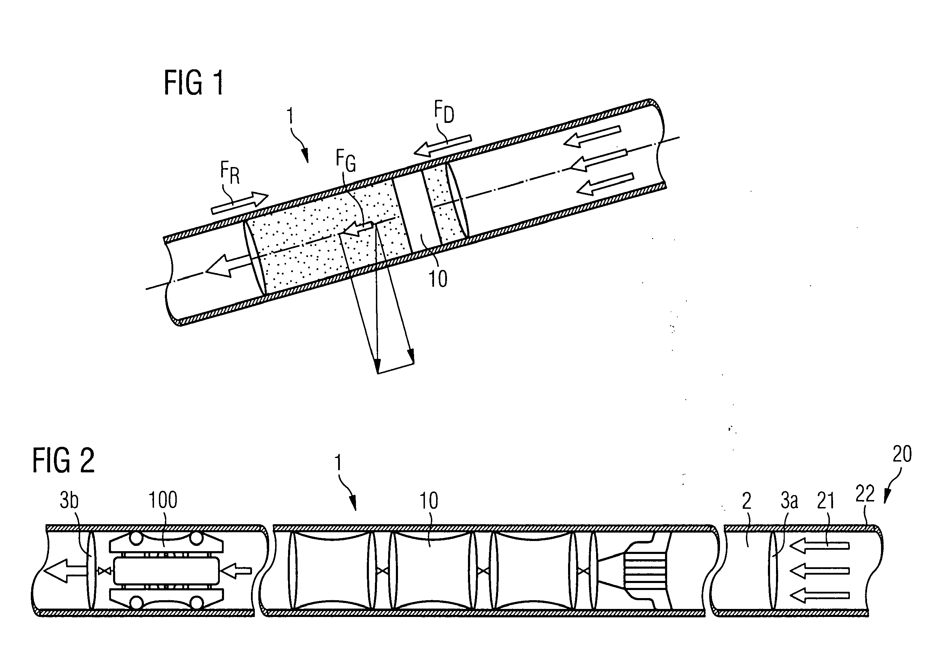

Figure 1 schematically shows the typical arrangement of a water batch comprising an ultrasonic inspection tool in a gas pipeline with its effective forces. As typical driving forces, there are to be considered the driving force $F_D$ of the gas pressure and the driving force $F_G$ through gravitation. As a typical counterforce the frictional resistance $F_R$ is to be considered. Depending upon direction and value of the gravitational force $F_G$, the effective driving force

$$F_{D, eff} = F_D + F_G - F_R$$

can have an accelerating or a decelerating action on the water batch.

Basically, there are two reasons for travel speed changes of the water batch, i.e. changes of the frictional resistance $F_R$ in the pipeline and changes in the pipeline inclination affecting the force $F_G$. Small diameter changes of the pipeline, welding seams, diameter deformations or tie ins account for different frictional resistances requiring more or less driving force from the gas pressure to negotiate them. In case of the pipeline declines, the batch is accelerated by gravitation.

For water batches not equipped with a speed control system, the only way to compensate for the changing counter force and driving force conditions is to promptly adapt the driving gas pressure. Unfortunately, the large pipeline gas volumes simply do not permit a pressure change with the same rate as the water batch accelerates/decelerates. Consequently, the batch accelerates significantly above the desired speed limit after negotiation of higher friction section as well as in pipeline sections with negative inclination. Therefore, a brake unit is provided for instantly compensating changes in the counter/driving force conditions.

Figure 2 shows the water batch 1 with the ultrasonic inspection tool 10 and a brake unit 100 in somewhat more detail. As can be seen, the ultrasonic inspection tool 10 is contained in the water column 2 of the water batch 1 and travels along the pipeline section 20 together with the water batch 1 due to a gas pressure excepted on a rear shield 3a by gas 21 advancing through the pipeline 20. Brake unit 100 is fixedly connected to a front shield 2 so as to slow down the front shield 3b, thereby slowing down the entire water batch 1. The water batch 1 can have an enormous length of several hundred meters and, thus, can have an enormous weight. A plurality of brake units 100 can be provided, should need arise. While the brake unit in the embodiment shown in figure 2 is contained inside the water batch 1 and connected to the front shield 2, it may well be connected to the ultrasonic tool 10 or to the rear shield 3, and it may also be placed in front of or behind the front or rear shields 2, 3 outside the water batch 1.

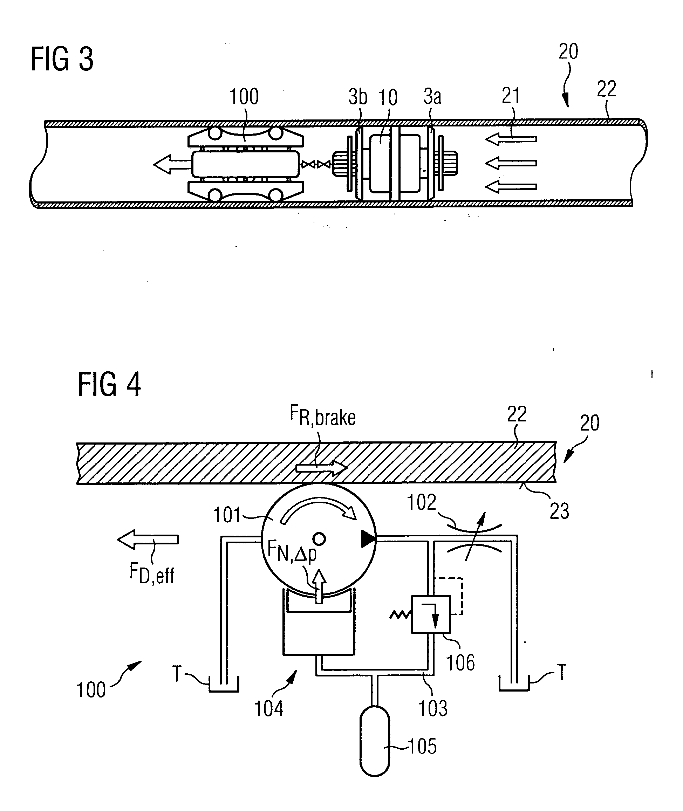

Figure 3 shows a pipeline inspection apparatus comprising an MFL inspection tool rather than an ultrasonic tool. Accordingly, it is not necessary that the inspection tool 10 travels inside a water batch. In this case, the brake unit 100 is directly connected to the inspection tool 10 in front thereof (in the direction of travel through the gas pipeline), but could as well be placed behind the inspection tool 10. The inspection tool 10 comprises a front shield 2 and a rear shield 3 having the function of stabilizing the orientation of the inspection tool 10 inside the gas pipeline, with the rear shield 3 having the further function of sealing the gas pipeline's cross section so as to take up the complete pressure provided by the gas 21 which is advanced through the pipeline 20.

Unlike the ultrasonic tools, which are typically contained in and moved along the pipeline in a closed liquid batch, MFL tools and other wall inspection tools can easily be equipped with a by-pass to maintain a high product flow rate in the pipeline.

In the following the basic principle of the brake unit will be described in context with figure 4. As the brake wheel 101 of the brake unit 100 rolls over the inner surface 23 of the wall 22 of the pipeline section 20, it's rotational force is used to pump a fluid through a throttle 102. The throttle 102 is adjustable so as to accommodate for varying applications. It may be electronically adjustable, possibly by remote control. Basically, the brake wheel 101 constitutes a rotational pump, and there are many technical ways of transforming the rotational movement of the brake wheel 101 into pumping action. Due to the fluid pumped from a reservoir or tank T through the throttle 102 back into the reservoir T, pressure will build up in front of the throttle 102 and has to be overcome by the action of the brake wheel 101. Accordingly, the rotation of the brake wheel 101 is slowed down proportionally to the pressure building up in front of the throttle 102 and, furthermore, the higher the brake wheel rotation is, the higher is the pressure building up in front of the throttle 102 and, accordingly, the higher is the resulting force counteracting the brake wheel rotation. Provided that the brake wheel 101 actually rolls and does not slide over the inner surface 23 of the pipeline wall 22, such brake wheel rotation resistance force will be transferred onto the pipeline wall through frictional forces as a brake force $F_{R, brake}$. Conclusively, with increasing travel speed and, thus, rotational speed of the brake wheel 101, the brake force $F_{R, brake}$ will increase accordingly, always provided that the brake wheel 101 is urged against the inner surface 23 of the pipeline 22 such that the brake force can indeed be transferred onto the pipeline wall 22.

It goes without saying that the overall apparatus and, in particular, the brake unit 100 will have to be adjusted such that it travels with a predetermined speed under predetermined conditions (fluid pressure in the pipeline, inclination of the pipeline, etc.). At the beginning of an inspection run, the inspection apparatus only provides static frictions against the driving fluid pressure.

Once the static frictions are overcome, the apparatus starts to move. With the apparatus picking up speed, the brake unit 100 builds up brake force which together with the dynamic friction of the apparatus provides the counterforce of the driving fluid pressure. The travel speed slowly increases until the driving force of the fluid pressure behind the apparatus equals the total forces provided by the brake unit and the dynamic friction of the entire unit. With a correctly adjusted brake unit, this equilibrium of forces should be obtained at the desired travel speed for the unit, e.g. 2 m/s. Accordingly, the throttle parameters have to be set appropriately to adjust this point of operation.

Ideally, the apparatus travels in a horizontal and friction wise undisturbed pipeline section. If the line remains horizontal and the frictional resistance of the apparatus does not change, the travel speed will not change either. In reality, however, both criteria do change and will disturb the equilibrium of forces. In the case of travel speed deceleration, the brake unit instantly reduces its brake force, as explained before. Ideally, the brake force decreases for exactly the same amount as the additional counterforce. This means that the original equilibrium of forces remains in place but the brake has changed its operating point, respectively the travel speed has lowered.

For the case that the system comes to a complete halt anyway, the brake ceases to create brake forces at all and the driving fluid pressure entirely works only against the static frictional counterforce, so that the brake remains ineffective until the apparatus starts moving again. Then it controls the restart acceleration as described before.

Similarly, where the travel speed accelerates above the desired travel speed, e.g. due to gravitation in negatively inclined pipeline sections or due to a sudden overcoming of a high-friction section, the brake unit increases its brake force immediately. Ideally, the brake force decreases for exactly the same amount as the additional driving force. This means that the original equilibrium of forces remains in place but the brake has changed its operating point, respectively the travel speed has increased.

It has previously been mentioned that it is important to urge the brake wheel 101 against the pipeline wall 22 with a force sufficient to transmit the braking force $F_{R, brake}$. In order to achieve this, the pressure building up in front of the throttle 102 is used and guided through a fluid line 103 to a piston-cylinder-arrangement 104 which acts on the brake wheel 101 either directly or indirectly. By this action, the brake wheel 101 is urged against the pipeline wall 22 in a normal direction. The respective urging force is designated in figure 4 with $F_{N, \Delta p}$.

Furthermore, in order to ensure that the brake wheel 101 is always pressed against the pipeline wall 22 with a predetermined minimum force, a pressurized oil reservoir 105 is provided in the fluid line 103 behind a pressure relief valve 106. The pressure relief valve 106 is arranged in the fluid line 103 to ensure that the pressure in the fluid line 103 never decreases below the predetermined minimum pressure provided by the pressure reservoir 105. That is, when the brake wheel 101 does not rotate and, therefore, no pressure is built up before the throttle 102, the pressure relief valve ensures that the pressure of the pressure reservoir does not escape through the throttle 102. When, however, the tank T is itself pressurized and, thus, forms a pressure reservoir, then the specific pressurized oil reservoir 105 can be dispensed with.

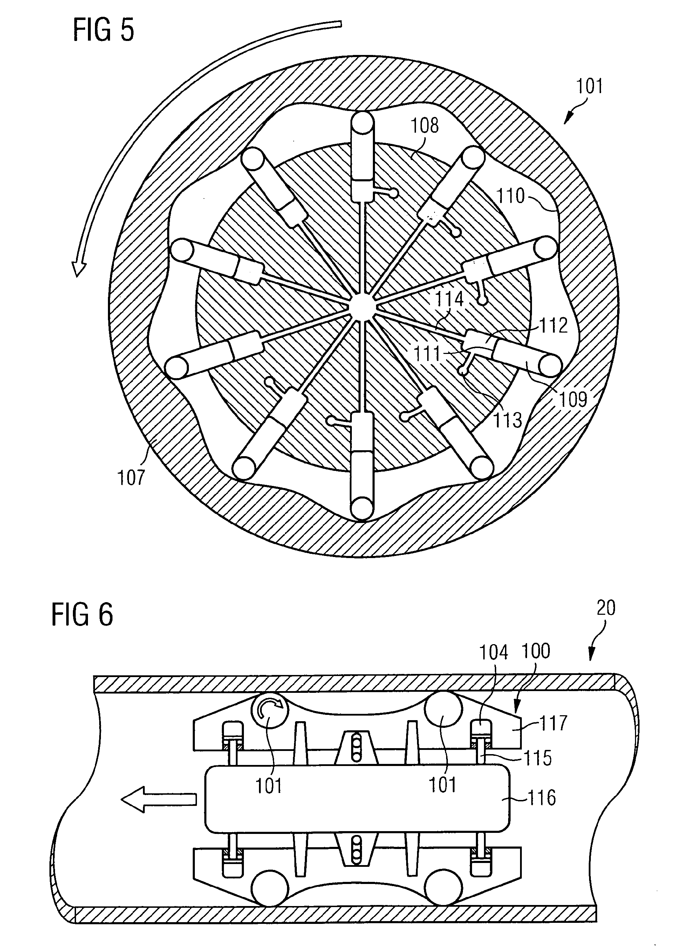

An example of how the brake wheel 101 can be realized as a rotational pump is shown in figure 5. Accordingly, the brake wheel 101 comprises a rotor 107 coming into contact with the inner surface 23 of the pipeline wall 22 and a stator 108 fixedly mounted on the brake unit 100. Hydraulic cylinders 109 are equally distributed over the circumference of the stator, in the present case ten hydraulic cylinders 109 are provided. One end of each hydraulic cylinder runs over a cam surface 110 of the rotor 107, whereas the respective other end of the hydraulic cylinder 109 defines an end wall 111 of a fluid chamber 112. Accordingly, the volume in the fluid chamber 112 changes depending upon the position of the hydraulic cylinder 109 relative to the cam surface 110 of the rotor 107. The fluid chamber 112 is connected to both a fluid line 113 of low pressure and a fluid line 114 of high pressure. The arrangement is such that by means of the hydraulic cylinders 109 the fluid, which is to be pumped through the throttle 102, is pumped from the low pressure line 113 into the high pressure line 114 leading to the throttle 102.

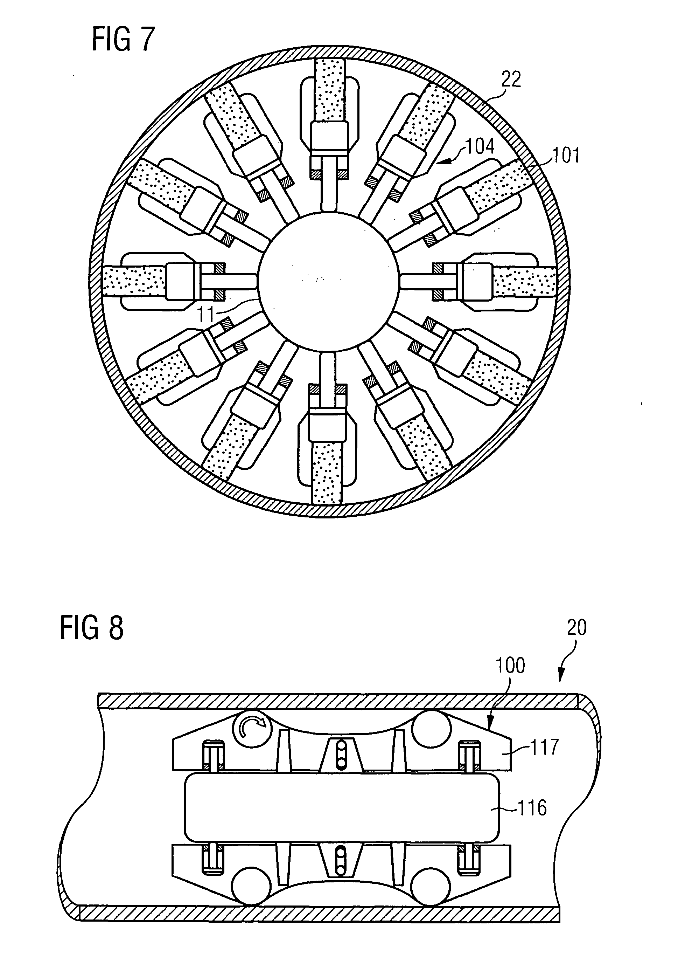

Figure 6 shows the brake unit 100 of figures 2 and 3 in the pipeline section 20 in greater detail. As can be seen, at least four brake wheels 101 are symmetrically arranged with always two brake wheels 101 being aligned in the direction of travel. In order to be able to transmit the brake forces onto the pipeline wall in a sufficient amount to slow down even heavy loads, it is preferable to distribute a plurality of brake wheels over the circumference of the brake unit 100, as can be seen in figure 7. Figure 7 is a cross sectional view of pipeline 20 and brake unit 100 shown in figure 6. In the example shown, 12 brake wheels 101 are distributed and equally spaced apart over the circumference of the pipeline wall 22. Each of the brake wheels 101 cooperates with a piston-cylinder-arrangement 104. In this particular embodiment, the piston-cylinder-arrangement 104 comprises a movable piston 115, of which one end is supported on a centrally arranged, rod-like body 116 and the other end is arranged in a fluid chamber which is integrally connected to a fixture 117 housing the brake wheels 101. The fixture 117 and centrally arranged body 116 are displaceable relative to each other in a radial direction. By this arrangement, the hydraulic cylinder 104 can force apart the brake wheel fixture 117 and the centrally arranged body 116, thereby allowing the brake unit to be used in pipelines with varying size or in differently sized pipelines. For instance, figure 8 shows the same brake unit 100 in a smaller sized pipeline 20 with a cross sectional diameter of 30 inch. Accordingly, the brake wheel fixture 117 and the centrally arranged body 116 are closer together as compared to figure 6.

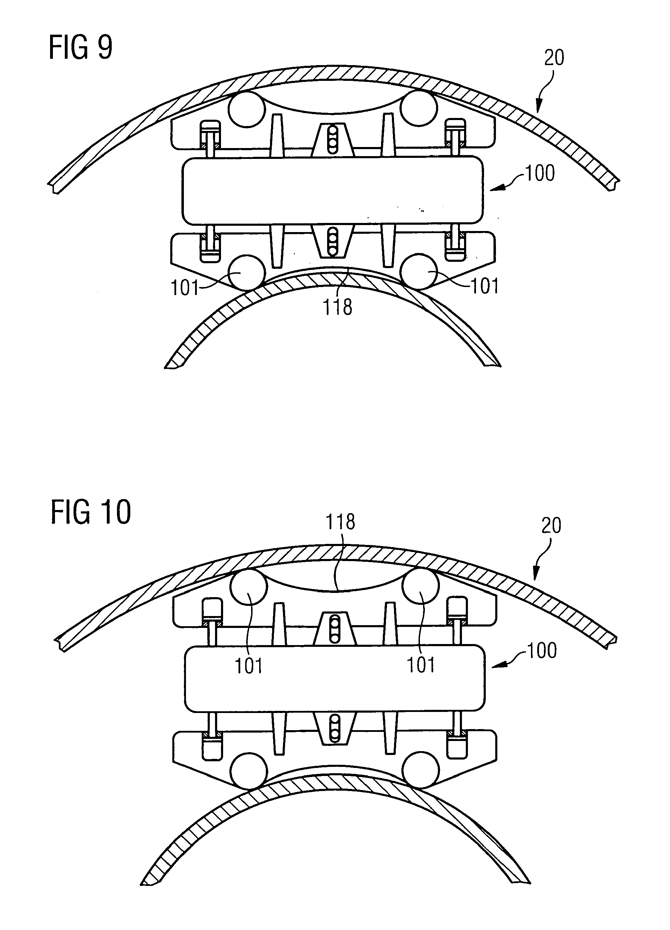

In addition, the flexibility of the brake unit 100 to adapt to pipeline cross sections of different size is likewise advantageous to maintain proper contact with the pipeline wall when travelling through curved pipeline sections. This is shown in figures 9 and 10 for pipelines of smaller and larger diameter, respectively. In order that the brake unit's outer contour does not come into conflict with the pipeline wall in such curved pipeline sections, the outer surface 118 of the brake unit is concave in the area between the axially spaced apart brake wheels 101.

PREFERRED EMBODIMENTS

Preferred embodiments of the invention are defined by the features specified in the following paragraphs:

1. A method of inspecting the integrity of the wall (22) of a pipeline (20), in particular gas pipeline, comprising the steps of:

- inserting into a pipeline (20) an inspection tool (10) adapted for inspecting the integrity of the wall (22) of the pipeline,
- moving the inspection tool (10) along a section of the pipeline to be inspected and collecting pipeline wall inspection data using the inspection tool while moving, and
- controlling the travel speed with which the inspection tool (10) is moved along the pipeline section so as to avoid an undesirable high travel speed of the inspection tool,

**characterized in that** the step of controlling the travel speed comprises the sub-steps of:

- moving a brake unit (100) along the pipeline section together with the inspection tool (10), said brake unit comprising at least one brake wheel (101),
- urging the brake wheel (101) against the wall (20) of the pipeline section so as to enable the brake wheel to roll on the wall, and
- using the brake wheel rotation to pump a fluid through a throttle (102).

2. The method of paragraph 1, wherein the brake unit (100) is configured such that a fluid pressure building up in front of the throttle (102), when the fluid is pumped through the throttle, increases progressively with an increase of the rotational speed of the brake wheel.

3. The method of any of paragraphs 1 to 2, further comprising the step of increasing, with an increase of the travel speed, a force with which the brake wheel (101) is urged against the wall (22) of the pipeline section.

4. The method of paragraph 3, wherein a fluid pressure building up in front of the throttle, when the fluid is pumped through the throttle, is used for generating at least a part ($F_{N, \Delta p}$) of the force with which the brake wheel is urged against the wall of the pipeline section.

5. The method of any of paragraphs 1 to 4, wherein a predetermined minimum force is always applied on the brake wheel (101), even when the brake wheel (101) does not rotate.

6. The method of paragraph 5, wherein the predetermined minimum force is provided from a pressure reservoir (105).

7. The method of any of paragraphs 1 to 6, wherein a plurality of said at least one brake wheel (101) is distributed over the inner circumference of the wall (22) of the pipeline section.

8. The method of any of paragraphs 1 to 7, wherein the inspection tool (10) is an ultrasonic inspection tool, the method further comprising the step of inspecting the wall (22) of the pipeline section using ultrasonic waves emitted from the ultrasonic inspection tool and guided to an inner surface of the wall through a liquid (2).

9. The method of any of paragraphs 1 to 8, comprising the steps of placing the inspection tool (10) in a liquid batch (1), the liquid batch providing liquid contact with the inner surface (23) of the wall (22) of the pipeline section, and sealing the liquid batch (1) at a front end and a rear end thereof against leakage of liquid from the liquid batch, wherein the step of moving the inspection tool (10) along the pipeline section comprises the step of advancing gas (21) through the pipeline section to thereby apply a driving gas pressure on the liquid batch (1) from the rear end thereof.

10. The method of paragraph 9, wherein the step of sealing the liquid batch includes sealing the liquid batch against by-passing of gas that is advanced through the pipeline section.

11. The method of any of paragraphs 9 to 10, wherein the liquid (2) from the liquid batch is used as the fluid to be pumped through the throttle (102).

12. The method of any of paragraphs 9 to 10, wherein a secondary fluid separate from the liquid of the liquid batch and separate from the gas advanced through the pipeline is used as the fluid to be pumped through the throttle (102).

13. The method of paragraph 12, wherein an oil is used as the fluid to be pumped through the throttle (102).

14. The method of any of paragraphs 9 to 13, comprising the additional step of, prior to moving the liquid batch (1) along the pipeline section to be inspected, moving a messenger liquid batch through the pipeline section, said messenger liquid batch comprising a liquid which may leak radially from the messenger liquid batch into gaps in the wall of the pipeline section as the messenger liquid batch is moved along the pipeline section, so as to fill said gaps with liquid.

15. The method of any of paragraphs 9 to 14, wherein the brake unit (101) is contained in the liquid batch (1).

16. The method of any of paragraphs 9 to 14, wherein the brake unit (101) is moved in front of or behind the liquid batch (1) and is fixedly connected to the liquid batch.

17. The method of any of paragraphs 1 to 7, wherein the inspection tool is a magnetic flux leakage (MFL), an axial flow detection (AFD) or an electro-magnetic acoustic transducer (EMAT) inspection tool.

18. The method of paragraph 17, further providing a shield (3a) equipped with a by-pass, wherein the step of moving the inspection tool (10) along the pipeline section comprises the step of advancing gas (21) through the pipeline section to thereby exert a driving gas pressure on the shield (3a).

19. The method of paragraph 18, wherein the brake unit is moved, relative to the direction of movement of the inspection tool, in front of the shield (3a) or behind the shield (3a), and is fixedly connected to the inspection tool (10) either directly or indirectly.

20. An apparatus for inspecting the integrity of the wall of a pipeline, in particular gas pipeline, comprising:

- an inspection tool (10) adapted to be inserted into and moved along a pipeline section to be inspected and further adapted to collect pipeline wall inspection data while moving, and
- a speed control mechanism for controlling the travel speed with which the inspection tool moves along a pipeline section,

characterized in that the speed control mechanism comprises:

- a brake unit (100) operatively connected to the inspection tool (10) so as to be movable along a pipeline section together with the inspection tool, said brake unit comprising at least one brake wheel (101),
- means (103-106) for urging the brake wheel radially outward so as to enable the brake wheel (101) to roll on a wall of a pipeline section to be inspected, and
- a pump (107-112) being operatively connected to the brake wheel (101) so as to pump a fluid through a throttle (102) upon rotation of the brake wheel.

21. The apparatus of paragraph 20, wherein the brake unit (100) is configured such that a fluid pressure building up in front of the throttle (102), when the fluid is pumped through the throttle, increases progressively with an increase of the rotational speed of the brake wheel.

22. The apparatus of any of paragraphs 20 to 21, further comprising means (107-112) to increase, with an increase of the travel speed, a force with which the brake wheel is urged against a wall of a pipeline section.

23. The apparatus of paragraph 22, wherein the apparatus is configured to generate from a fluid pressure building up in front of the throttle (102), when the fluid is pumped through the throttle, at least a part ($F_{N, \Delta p}$) of the force with which the brake wheel is urged against a wall of a pipeline section.

24. The apparatus of paragraph 23, comprising a brake wheel fixture (117) on which the brake wheel (101) is mounted to be rotatable and further comprising a fluid line (103) transmitting the fluid pressure from in front of the throttle (102) directly or indirectly onto the brake wheel fixture (117) so as to urge the brake wheel fixture with the brake wheel radially outwardly.

25. The apparatus of paragraph 24, wherein the brake unit (100) comprises a movable piston (115) and a centrally arranged body (116), the movable piston (115) being arranged between the brake wheel fixture (117) and the centrally arranged body (116) so as to urge apart the brake wheel fixture and the centrally arranged body when the fluid pressure from in front of the throttle (102) is transmitted onto the brake wheel fixture (117).

26. The apparatus of paragraph 25, wherein the movable piston (115) has two opposing ends with one end of the movable piston being supported on the centrally arranged body (116) and the other end of the movable piston being arranged in a fluid chamber which is integrally connected to the brake wheel fixture (117), wherein the fluid pressure transmitted from in front of the throttle (102) is transmitted to said fluid chamber.

27. The apparatus of any of paragraphs 20 to 26, comprising a pressure reservoir (105) adapted to always apply a predetermined minimum force on the brake wheel (101).

28. The apparatus of any of paragraphs 20 to 27, wherein a plurality of said at least one brake wheel (101) is distributed over a circumference of the brake unit (100) so as to come into contact with a wall of a pipeline section to be inspected.

29. The apparatus of any of paragraphs 20 to 28, wherein at least two of the at least one brake wheel (101) are spaced apart in the direction of movement of the apparatus.

30. The apparatus of paragraph 29, wherein an outer contour of the brake unit (100) is concave in an area (118) between said two spaced apart brake wheels (101) so as to enable the brake unit (100) to be moved through curved pipeline sections.

31. The apparatus of any of paragraphs 20 to 30, wherein the inspection tool (10) is an ultrasonic inspection tool adapted to inspect a wall of a pipeline section by means of ultrasonic waves emitted from the ultrasonic inspection tool.

32. The apparatus of any of paragraphs 20 to 31, comprising a front shield (3b) and a rear shield (3a) adapted to form a liquid batch (1) in which the inspection tool is contained when moved along a pipeline section to be inspected, said liquid batch (1) providing liquid contact with an inner surface (23) of a wall of a pipeline section to be inspected, wherein the front and rear shields (3a, 3b) are adapted to seal against a wall of a pipeline section to be inspected so as to prevent any by-passing of gas that is advanced through the pipeline section.

33. The apparatus of paragraph 32, wherein the brake unit is adapted to use the liquid (2) from the liquid batch (1) as the fluid to be pumped through the throttle (102).

34. The apparatus of paragraph 32, wherein a secondary fluid separate from the liquid (2) of the liquid batch (1) and separate from any gas advanced through the pipeline section to be inspected is provided as the fluid to be pumped through the throttle (102).

35. The apparatus of paragraph 34, wherein oil is provided as the fluid to be pumped through the throttle (102).

36. The apparatus of any of paragraphs 32 to 35, wherein the brake unit (101) is adapted to be contained in the liquid batch (1) along with the inspection tool (10).

37. The apparatus of any of paragraphs 32 to 36, wherein the brake unit (101) is fixedly connected in front of the front shield (3b) or behind the rear shield (3a).

38. The apparatus of any of paragraphs 20 to 30, wherein the inspection tool (10) is a magnetic flux leakage (MFL), an axial flow detection (AFD) or an electro-magnetic acoustic transducer (EMAT) inspection tool.

39. The apparatus of paragraph 38, further comprising a shield (3a) adapted to seal against a wall of a pipeline section to be inspected, said shield (3a) comprising a by-pass for the by-passing of fluid that is advanced through the pipeline section.

**Claims**

1. A method of inspecting the integrity of the wall (22) of a pipeline (20), in particular gas pipeline, comprising the steps of:

    - inserting into a pipeline (20) an inspection tool (10) adapted for inspecting the integrity of the wall (22) of the pipeline,
    - moving the inspection tool (10) along a section of the pipeline to be inspected and collecting pipeline wall inspection data using the inspection tool while moving, and
    - controlling the travel speed with which the inspection tool (10) is moved along the pipeline section so as to avoid an undesirable high travel speed of the inspection tool,

    **characterized in that** the step of controlling the travel speed comprises the sub-steps of:

    - moving a brake unit (100) along the pipeline section together with the inspection tool (10), said brake unit comprising at least one brake wheel (101),
    - urging the brake wheel (101) against the wall (20) of the pipeline section so as to enable the brake wheel to roll on the wall, and
    - using the brake wheel rotation to pump a fluid through a throttle (102).

2. The method of claim 1, further comprising the step of increasing, with an increase of the travel speed, a force with which the brake wheel (101) is urged against the wall (22) of the pipeline section.

3. The method of claim 2, wherein a fluid pressure building up in front of the throttle, when the fluid is pumped through the throttle, is used for generating at least a part ($F_{N,\Delta p}$) of the force with which the brake wheel is urged against the wall of the pipeline section.

4. The method of any of claims 1 to 3, wherein a predetermined minimum force is always applied on the brake wheel (101), even when the brake wheel (101) does not rotate.

5. The method of any of claims 1 to 4, wherein a plurality of said at least one brake wheel (101) is distributed over the inner circumference of the wall (22) of the pipeline section.

6. The method of any of claims 1 to 5, wherein the inspection tool (10) is an ultrasonic inspection tool, the method further comprising the step of inspecting the wall (22) of the pipeline section using ultrasonic waves emitted from the ultrasonic inspection tool and guided to an inner surface of the wall through a liquid (2).

7. The method of any of claims 1 to 6, comprising the steps of placing the inspection tool (10) in a liquid batch (1), the liquid batch providing liquid contact with the inner surface (23) of the wall (22) of the pipeline section, and sealing the liquid batch (1) at a front end and a rear end thereof against leakage of liquid from the liquid batch, wherein the step of moving the inspection tool (10) along the pipeline section comprises the step of advancing gas (21) through the pipeline section to thereby apply a driving gas pressure on the liquid batch (1) from the rear end thereof.

8. The method of any of claims 1 to 5, wherein the inspection tool is a magnetic flux leakage (MFL), an axial flow detection (AFD) or an electro-magnetic acoustic transducer (EMAT) inspection tool.

9. An apparatus for inspecting the integrity of the wall of a pipeline, in particular gas pipeline, comprising:

- an inspection tool (10) adapted to be inserted into and moved along a pipeline section to be inspected and further adapted to collect pipeline wall inspection data while moving, and
- a speed control mechanism for controlling the travel speed with which the inspection tool moves along a pipeline section,

**characterized in that** the speed control mechanism comprises:

- a brake unit (100) operatively connected to the inspection tool (10) so as to be movable along a pipeline section together with the inspection tool, said brake unit comprising at least one brake wheel (101),
- means (103-106) for urging the brake wheel radially outward so as to enable the brake wheel (101) to roll on a wall of a pipeline section to be inspected, and
- a pump (107-112) being operatively connected to the brake wheel (101) so as to pump a fluid through a throttle (102) upon rotation of the brake wheel.

10. The apparatus of claim 9, further comprising means (107 to 112) to increase, with an increase of the travel speed, a force with which the brake wheel is urged against a wall of a pipeline section.

11. The apparatus of claim 10, wherein the apparatus is configured to generate from a fluid pressure building up in front of the throttle (102), when the fluid is pumped through the throttle, at least a part ($F_{N,\Delta p}$) of the force with which the brake wheel is urged against a wall of a pipeline section.

12. The apparatus of claim 11, comprising a brake wheel fixture (117) on which the brake wheel (101) is mounted to be rotatable and further comprising a fluid line (103) transmitting the fluid pressure from in front of the throttle (102) directly or indirectly onto the brake wheel fixture (117) so as to urge the brake wheel fixture with the brake wheel radially outwardly.

13. The apparatus of any of claims 9 to 12, comprising a pressure reservoir (105) adapted to always apply a predetermined minimum force on the brake wheel (101).

14. The apparatus of any of claims 9 to 13, wherein a plurality of said at least one brake wheel (101) is distributed over a circumference of the brake unit (100) so as to come into contact with a wall of a pipeline section to be inspected.

15. The apparatus of any of claims 9 to 14, wherein at least two of the at least one brake wheel (101) are spaced apart in the direction of movement of the apparatus.

16. The apparatus of any of claims 9 to 15, wherein the inspection tool (10) is an ultrasonic inspection tool adapted to inspect a wall of a pipeline section by means of ultrasonic waves emitted from the ultrasonic inspection tool.

17. The apparatus of any of claims 9 to 16, comprising a front shield (3b) and a rear shield (3a) adapted to form a liquid batch (1) in which the inspection tool is contained when moved along a pipeline section to be inspected, said liquid batch (1) providing liquid contact with an inner surface (23) of a wall of a pipeline section to be inspected, wherein the front and rear shields (3a, 3b) are adapted to seal against a wall of a pipeline section to be inspected so as to prevent any by-passing of gas that is advanced through the pipeline section to be inspected.

18. The apparatus of any of claims 9 to 15, wherein the inspection tool (10) is a magnetic flux leakage (MFL), an axial flow detection (AFD) or an electro-magnetic acoustic transducer (EMAT) inspection tool.

FIG 1

FIG 2

EP 2 085 155 A1

FIG 3

100          3b  10  3a          21          20          22

FIG 4

$F_{R,brake}$

22          20

23

101          102

$F_{D,eff}$          $F_{N,\Delta p}$

106

100          T          104          103          T          105

## FIG 5

## FIG 6

## FIG 7

## FIG 8

FIG 9

20

100

101

118

101

FIG 10

118

20

100

101

101

**European Patent Office**

## EUROPEAN SEARCH REPORT

Application Number

EP 08 00 1849

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 170 902 A (PALLAN WILLIAM [GB]) 16 October 1979 (1979-10-16) | 1-5,7, 9-15,17 | INV. B08B9/04 |
| Y | * column 1, line 5 - line 55 * * column 2, line 6 - column 3, line 13; figures 1-4 * | 6,16 | F16L55/38 G01N27/90 G01N29/265 |
| X | US 4 388 871 A (BRAITHWAITE JOHN C [GB] ET AL) 21 June 1983 (1983-06-21) * column 2, line 13 - column 4, line 23; figures 1-5 * * column 2, line 6 - column 3, line 13; figures 1-4 * | 1,4,7-9, 13,17,18 | |
| Y | US 5 648 613 A (KIEFER KARL F [US]) 15 July 1997 (1997-07-15) * column 1, line 11 - column 2, line 19 * * column 4, line 12 - line 44; figure 1 * | 6,16 | |
| A | US 3 058 137 A (DOYLE EARL N ET AL) 16 October 1962 (1962-10-16) * column 1, line 9 - line 52 * * column 1, line 68 - column 2, line 50; figures 1a,b * * column 2, line 8 - column 4, line 75 * | 1-18 | TECHNICAL FIELDS SEARCHED (IPC) B08B F16L G01N |
| A | US 4 769 598 A (KRIEG GUNTHER [DE] ET AL) 6 September 1988 (1988-09-06) * column 2, line 32 - column 3, line 38; figure 1 * * column 4, line 40 - line 51 * | 1-18 | G01M G21C F17D |
| A | WO 86/01751 A (STORESUND PER) 27 March 1986 (1986-03-27) * page 3, line 14 - page 5, line 12; figure 1 * | 1-18 | |

The present search report has been drawn up for all claims

| Place of search | Date of completion of the search | Examiner |
|---|---|---|
| Munich | 24 June 2008 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 00 1849

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2008

| Patent document cited in search report | | Publication date | Patent family member(s) | | Publication date |
|---|---|---|---|---|---|
| US 4170902 | A | 16-10-1979 | AU | 506316 B1 | 20-12-1979 |
| | | | DE | 2822038 A1 | 22-11-1979 |
| | | | NL | 7805575 A | 27-11-1979 |
| US 4388871 | A | 21-06-1983 | DE | 2860736 D1 | 03-09-1981 |
| | | | EP | 0001155 A1 | 21-03-1979 |
| | | | NO | 782586 A | 30-01-1979 |
| | | | US | 4458601 A | 10-07-1984 |
| US 5648613 | A | 15-07-1997 | US | 5641909 A | 24-06-1997 |
| | | | US | 5574223 A | 12-11-1996 |
| | | | US | 5594176 A | 14-01-1997 |
| US 3058137 | A | 16-10-1962 | NONE | | |
| US 4769598 | A | 06-09-1988 | AU | 5469886 A | 02-10-1986 |
| | | | CA | 1297536 C | 17-03-1992 |
| | | | DE | 3511076 A1 | 09-10-1986 |
| | | | EP | 0196020 A2 | 01-10-1986 |
| | | | NO | 861254 A | 29-09-1986 |
| WO 8601751 | A | 27-03-1986 | AU | 4809385 A | 08-04-1986 |
| | | | EP | 0195797 A1 | 01-10-1986 |
| | | | NO | 843686 A | 18-03-1986 |

EPO FORM P0459

For more details about this annex : see Official Journal of the European Patent Office, No. 12/82

**EP 2 085 155 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *APIA Company Member News in ''The Australian Pipeliner,* August 2003, 24 ff